# EUROPÄISCHE PATENTSCHRIFT

(11) **EP 1 853 654 B1**
(45) Veröffentlichungstag und Bekanntmachung des Hinweises auf die Patenterteilung: **17.09.2008**
(21) Anmeldenummer: 06704697.9
(22) Anmeldetag: 15.02.2006
(51) Int. Cl.: C08J 9/36, C08L 25/06, C08J 9/00, B29C 44/10

(54) **SCHAUMSTOFFPRODUKT**
FOAM MATERIAL PRODUCT
PRODUIT ALVEOLAIRE

(30) Priorität: 18.02.2005 AT 2672005
(43) Veröffentlichungstag der Anmeldung: 14.11.2007
(73) Patentinhaber: Zorn, Alois, 6020 Innsbruck (AT); Nowy, Florian, 6020 Innsbruck (AT)
(72) Erfinder: Zorn, Alois, 6020 Innsbruck (AT); Nowy, Florian, 6020 Innsbruck (AT)
(74) Vertreter: Ofner, Clemens
(86) Internationale Anmeldenummer: PCT/AT2006/000055
(87) Internationale Veröffentlichungsnummer: WO 2006/086813

(56) Entgegenhaltungen:
- EP-A- 1 493 763
- EP-A- 1 624 024
- WO-A-20/04099315
- GB-A- 884 896
- US-A- 5 824 766
- US-B1- 6 187 832

## Beschreibung

Die Erfindung betrifft ein Schaumstoffprodukt aus einem expandierten, geschlossenzelligen Schaumstoff, ein Verfahren zu seiner Herstellung und seine Verwendung.

Schaumstoffprodukte aus expandierten, geschlossenzelligen Schaumstoffen, sind seit mehreren Jahrzehnten in verschiedenen Anwendungsbereichen im Einsatz. Insbesondere expandierter Polystyrol-Partikelschaumstoff (im folgenden als EPS abgekürzt) ist unter verschiedenen Bezeichnungen, unter anderem als expandierter Polystyrol-Hartschaurn oder als Styropor® im Handel und wird hauptsächlich für Verpackungszwecke oder als Wärmedämmmaterial verwendet.

Die bekannte Herstellung von EPS unterteilt sich in drei Stufen:

### 1. Vorschäumen

In der ersten Stufe wird der Rohstoff für EPS (Granulat aus Polystyrol vermengt mit Pentan als Treibmittel) vorwiegend mit Hilfe von Wasserdampf in so genannten Vorschäumem bei Temperaturen über 90 °C vorgeschäumt. Dabei blähen sich die Granulatpartikel infolge des verdampfenden Treibmittels - Pentan - und teilweise auch infolge des eingedrungenen Wasserdampfes um etwa das 20- bis 50fache ihres ursprünglichen Volumens zu rundlichen Perlen auf, wobei sich im Perleninneren eine weitgehend geschlossenzellige Struktur bildet. Durch den Aufschäumgrad der hauptsächlich von der Zeitdauer der Wärmeeinwirkung abhängt, wird die Rohdichte (kg/m³) der fertigen EPS-Körper bestimmt. Sie beträgt vorzugsweise zwischen 10 und 35 kg/m³ und hat einen großen Einfluss auf die meisten Schaumstoffeigenschaften.

### 2. Zwischenlagerung

Die vorgeschäumten Perlen werden anschließend einige Zeit in belüftenden Silos zwischengelagert, beim Abkühlen der Perlen kondensiert in den einzelnen Zellen noch vorhandenes Treibmittel und Wasserdampf vom Vorschäumprozess. Der hierbei entstehende Unterdruck wird durch eindiffundierende Luft ausgeglichen, wodurch die vorgeschäumten Perlen, die zur Weiterverarbeitung erforderliche Stabilität erhalten.

### 3. Ausschäumen

Ein in der Praxis häufig angewendetes Verfahren ist das Blockschäumen. Dabei werden die vorgeschäumten Perlen in quaderförmige Metallformen, die allseits mit Dampfdüsen ausgestattet sind, eingefüllt und erneut Wasserdampf ausgesetzt. Dabei herrschen Temperaturen zwischen 110 °C und 120 °C. Die Perlen schäumen weiter auf, werden plastisch und leicht klebrig und verbinden sich ("Verschweißen") durch den von ihnen selbst ausgehenden Druck zu einem homogenen Schaumstoffblock. Aus diesen Blöcken werden nach einer Abkühlphase, entweder durch Sägen, Heißdrahtschneiden oder sonstige Bearbeitungsverfahren Halbzeuge oder Fertigteile hergestellt.

Die mit den bekannten Herstellverfahren erreichbaren Eigenschaften von EPS, insbesondere die guten Wärmedämmeigenschaften, werden vielfach genutzt, jedoch sind es speziell die mechanischen Eigenschaften von EPS, die die Verwendung für Anwendungsgebiete mit höheren Festigkeitsanforderungen erschweren oder unmöglich machen. Die relativ niedrigen Festigkeitswerte (Druckfestigkeit, Zugfestigkeit, Biegezugfestigkeit) erfordern z.B. bei der Verwendung von EPS als Konstruktionsmaterial für Baukonstruktionen eine besondere Befestigungstechnik zur großflächigen Einleitung von Kräften. Weiters ist eine Verwendung als tragender Bauteil fast ausschließlich nur in Kombination mit anderen Werkstoffen mit höherer Festigkeit möglich.

Zur Verbesserung bestimmter Eigenschaften von EPS-Produkten sind verschiedene Verfahren bekannt, insbesondere Verfahren zur Veränderung der EPS-Produkte an ihrer Oberfläche. Bei einem Verfahren wird beispielsweise zur Verringerung der Wasseraufnahme die Oberfläche von EPS-Produkten kurzzeitig (wenige Sekunden) mit Heißluft beaufschlagt, wobei durch Anschmelzen eine krustenartige, dichte Oberfläche erzielt wird, die das Eindringen von Feuchtigkeit verringert. Durch diese Wärmebehandlung wird auch eine Oberflächenverfestigung bewirkt, wodurch die wärmebehandelten EPS-Produkte einen besseren Schutz gegen mechanische Beschädigungen aufweisen, als unbehandelte EPS-Produkte. Bei diesem Verfahren beschränkt sich die Erhöhung der Werkstofffestigkeit auf den Bereich der angeschmolzenen Oberfläche. Weiters besteht bei diesem Verfahren die Gefahr, dass bei nur geringfügig zu langer Wärmebehandlung mit Heißluft der Schmelzvorgang zu stark ist und der Formkörper zerstört wird.

Aus dem Stand der Technik sind verschiedene Verfahren betreffend eine Wärmebehandlung von Schaumstoffkörpern bekannt.

Die Schrift GB 884 896 A beschreibt ein Verfahren zur Herstellung von Erzeugnissen aus Polystyrol-Schaumstoffabfällen, bei dem diese gegebenenfalls nach Zerkleinerung, unter mechanische Druckeinwirkung gesetzt und anschließend mit Wasserdampf von 1 bis etwa 7 Atü und einer Temperatur von 104 bis 130 °C beaufschlagt und einen dabei eintretenden Druckanstieg zu einem zusammenhängenden Schaumstoffkörper verschweißt werden. Eine dazu verwendete Vorrichtung umfasst eine Pressform, in der die Polystyrol-Schaumstoffabfälle vor der Bedampfung zusammengepresst und in ihrem Volumen reduziert werden. Gemäß dem offenbarten Verfahren erfolgt diese Volumenreduktion bzw. Dichteerhöhung vor der Wärmebehandlung mit überhitztem Wasserdampf und die Verschweißung der Polystyrol-Schaumstoffteile zu einem zusammenhängenden Schaumstoffkörper erfolgt durch Aufblähen der Teile innerhalb eines von der Pressform vorgegebenen, während der Wärmebehandlung mit Wasserdampf konstanten Volumens.

Die EP-A1 624024 offenbart eine eine biologisch abbaubare Polyesterharz-Zusammensetzung enthaltend Hydroxycarboxylsäure, Acrylsäureester und Schichtsilikat, sowie ein Verfahren zur Herstellung der Polyesterharz-Zusammensetzung umfassend einen Schmelzknetvorgang. Die biologisch abbaubare Polyesterharz-Zusammensetzung kann durch Schäumen, Spritzgießen, Extrudieren und Blasformen verarbeitet werden. In einem Ausführungsbeispiel 21 wird eine Schaumstoffbahn aus der erfindungsgemäßen Polyesterharz-Zusammensetzung hergestellt und zu einer Schale für Lebensmittel weiterverarbeitet. Zur Feststellung der Wärmebeständigkeit wird diese Schale versuchsweise mit Wasser gefüllt und in einem Mikrowellenofen für drei Minuten erhitzt, siehe Absatz [92]. Der in den Absätzen [49 bis 53] empfohlene Temperaturbereich zwischen Glasübergangstemperatur und Schmelztemperatur eines aus dem erfindungsgemäßen Polyesterharz hergestellten Schaumstoffprodukts, bezieht sich auf das Tiefziehen und Wärmebehandeln des Schaumstoffmaterials, jedoch nicht auf eine Wärmebehandlung zur Erhöhung der Dichte des Schaumstoffmaterials.

Aus EP 1 493 763 A1 ist ein Kunststoffmaterial für das so genannte "slush-molding"-Verfahren bekannt, dass sich durch eine hohe Wärmestabilität auszeichnet. Zur Überprüfung der Wärmestabilität eines Ausführungsbeispiels Nr. 4 wird in Absatz [150] offenbart, einen geschäumten Kunststoffkörper mit dem erfindungsgemäßen Material einer Lufttrocknung bei 120 °C für 500 Stunden aus-zusetzen. Eine Änderung des Volumens bzw. der Dichte des Schaumstoffprodukts im Zuge dieser Wärmebehandlung ist aus D4 nicht bekannt.

US 6,187,832 B1 offenbart ein Verfahren zur Herstellung eines flexiblen Polyurethanschaums. Dabei wird durch ein Reaktionsverfahren ein steifer Polyurethanschaum hergestellt, der nach seiner Aushärtung durch Aufbringen von Druckspannungen gestaucht wird, wodurch aus dem steifen Polyurethanschaum ein flexibler Polyurethanschaum entsteht; anschließend wird der so entstandene flexible Polyurethanschaum für einen Zeitraum von einer halben Minute bis zu acht Stunden einer Wärmebehandlung bei einer Temperatur zwischen 70 °C und 200 °C unterzogen. Zusätzlich zur erzielten Flexibilität des Polyurethanschaum, weist dieser durch die Wärmebehandlung in einem Temperaturbereich von -100 °C bis + 25 °C einen weitgehend gleich bleibenden Elastizitätsmodul auf. Durch die Wärmebehandlung wird eine gegebenenfalls beim Stauchvorgang eingetretene Erhöhung der Dichte bzw. Volumenreduktion des Schaumstoffkörpers zumindest teilweise rückgängig gemacht.

US-B1-6187832 beschreibt ein Verfahren bei dem ein Polyamidimidschaum einer Wärmebehandlung von 300 °C während einer Dauer von einer Stunde unterzogen wird. Durch die Wärmebehandlung des Kunststoffschaums werden seine Glasübergangstemperatur und damit auch seine Wärmebeständigkeit erhöht. Eine Dichteänderung bzw. Volumenänderung des Polyamidimidschaums durch die Wärmebehandlung ist aus dieser Schrift nicht bekannt.

Aufgabe der Erfindung ist es, einen Schaumstoff zu schaffen, der verbesserte Eigenschaften, insbesondere höhere Festigkeitswerte, aufweist.

Die Aufgabe wird dadurch gelöst, dass ein Körper aus expandiertem geschlossenzelligem Schaumstoff, insbesondere expandiertem Polystyrol-Partikelschaum, einer nicht schmelzenden Wärmebehandlung bei einer Temperatur über der Glasübergangstemperatur des den Schaumstoff bildenden Kunststoffes, insbesondere von Polystyrol, unterzogen wird, dadurch gekennzeichnet, dass das Volumen des Schaumstoffprodukts durch die Wärmebehandlung gegenüber dem Ausgangszustand vor der Wärmebehandlung um einen Wert aus einem Bereich mit einer unteren Grenze von 50 %, vorzugsweise 75 %, insbesondere 85 % und einer oberen Grenze von 97 %, vorzugsweise 96,5 %, insbesondere 96 % reduziert wird.

Als vorteilhaft bei dem erfindungsgemäßen Verfahren erweist sich, dass weit verbreitete und leicht verfügbare Ausgangswerkstoffe durch ein einfaches Verfahren in ihren Eigenschaften modifiziert werden und dadurch neue Anwendungsbereiche ermöglicht werden. Besonders vorteilhaft ist weiters, dass bei ein und dem selben Ausgangswerkstoff durch verschieden lange Einwirkzeiten und verschieden hohe Temperaturen der Wärmebehandlung verschieden starke Volumenreduktion erreicht wird und das Schaumstoffprodukt in seinen Eigenschaften für das jeweilige Anwendungsgebiet optimal eingestellt werden kann. Im Gegensatz zu anderen Wärmebehandlungsverfahren, bei denen Veränderungen des Ausgangswerkstoffes nur in oberflächennahen Bereichen erfolgen, wird beim erfindungsgemäßen Wärmebehandlungsverfahren der Ausgangswerkstoff über seinen gesamten Querschnitt verändert.

Prinzipiell sind alle Kunststoffe schäumbar, nennenswerte Bedeutung haben jedoch nur Schäume aus thermoplastischen Kunststoffen, die aus nichtvernetzten, also amorphen oder teilkristallinen Polymeren bestehen. Diese Polymere erweichen im allgemeinen zunächst beim Erwärmen und beginnen bei weiterem Erhitzen zu fließen. Viele Thermoplaste besitzen einen Erweichungsbereich oder auch Glasübergangsbereich genannt, und einen Schmelzbereich. Bei Durchlaufen des Glasübergangsbereiches erweichen die amorphen Anteile und die mechanische Festigkeit der Kunststoffe nimmt ab. In diesem Zustand zeigen sie auch ein mehr oder weniger ausgeprägtes viskoelastisches Verhalten. Bei weiterem Erhitzen von thermoplastischen Kunststoffen über den charakteristischen Schmelzbereich hinaus, schmelzen enthaltene kristalline Strukturen dieser Kunststoffe und es liegt reine Schmelze vor. Da der Glasübergang der Kunststoffe, wie erwähnt nicht bei einer bestimmten Temperatur sondern in einem Temperaturbereich auftritt, bezieht sich der Begriff Glasübergangstemperatur in dieser Anmeldung auf die werkstoffabhängige untere Grenze des Glasübergangsbereiches, ab der die erwähnten Veränderungen der Werkstoffeigenschaften eintreten.

Die Erwärmung des Ausgangswerkstoffes über seine Glasübergangstemperatur bewirkt, dass ein Teil der bei der Schaumstoffherstellung eingetretenen Expansion wieder rückgängig gemacht wird, indem die Molekülketten bei dieser Temperatur gegenüber dem Ausgangszustand beweglicher werden und der den Schaumstoff aufbauende Kunststoff aus einem hartelastischen in einen vergleichsweise weichelastischen Zustand übergeführt wird. Bei dem erfindungsgemäßen Wärmebehandlungsvorgang ziehen sich die dünnen Wände des zelligen Schaumstoffes, ausgehend von ihrem, durch die Expansion bei der Herstellung gestreckten Zustand gleichmäßig und über den gesamten Querschnitt zusammen, wodurch die erfindungsgemäße Volumenreduktion des Schaumstoffes eintritt. Da es sich hier um einen stark zeitabhängigen Vorgang handelt, kann der Grad der Volumenreduktion einfach durch die zeitliche Länge der Wärmebehandlung festgelegt werden. Die mechanische Festigkeit des Materials, nimmt bei diesem Vorgang deutlich zu, da die Wandstärke der Zellenstruktur sich durch den Schrumpfvorgang erhöht und gleichzeitig der Abstand zwischen den Wänden ebenfalls durch den Schrumpfvorgang abnimmt, wodurch pro Flächeneinheit des Querschnittes mehr Wände zur Übertragung und Aufnahme von Kräften zur Verfügung stehen.

Die Temperatur, auf die der Körper aus dem Ausgangsmaterial erwärmt wird und welche bis zum Abschluss der Wärmebehandlung beibehalten wird, liegt jedenfalls über der Glasübergangstemperatur des den Schaumstoff bildenden Kunststoffes, darf aber nicht so hoch gewählt werden, dass der Schaumstoff schmilzt. Die Temperatur, die während der Wärmebehandlung beibehalten wird, bestimmt auch die maximal erreichbare Volumenreduktion. Bei Temperaturen knapp über der Glasübergangstemperatur ist nur eine geringe Volumenreduktion erzielbar, da dadurch auch nur geringe Schrumpfspannungen ausgelöst werden, die von der durch die Volumenreduktion hervorgerufenen Verfestigung des Schaumstoffes ausgeglichen werden. Bei Temperaturen die deutlich über der Glasübergangstemperatur des Schaumstoffes liegen, sind die Schrumpfspannungen insgesamt größer und können nur durch stärkere Volumenreduktion ausgeglichen werden. Bei zu hoch gewählter Temperatur wird der Prozess der Volumenreduktion an den Außenflächen des Schaumstoffkörpers so schnell eingeleitet, dass an der Oberfläche Risse entstehen können, da durch die langsame Wärmeleitung im Schaumstoff die Temperatur im Körperinneren nicht so schnell erhöht wird, um die Volumenreduktion auch im Körperinneren einzuleiten. Bei der Verwendung von zu heißen Wärmequellen besteht durch die langsame Wärmeleitung in das Körperinnere das Risiko von Temperaturspitzen an der Körperoberfläche, die zu einem nicht erwünschten Schmelzen des Schaumstoffes führen können. Für die Wahl der Methode zur Wärmeübertragung auf den Körper ist dieser Umstand jedenfalls zu berücksichtigen.

Das erfindungsgemäße Verfahren kann im Fall der Verwendung von EPS als Ausgangswerkstoff auch als eine Art von Sinterverfahren betrachtet werden, da, ähnlich wie in der Pulvermetallurgie, gepresste Partikel durch eine Wärmebehandlung unter der Schmelztemperatur verfestigt werden.

Die erfindungsgemäße Wärmebehandlung kann auch bei Schäumen aus anderen Kunststoffarten insbesondere auch expandierten geschlossenzelligen Schäumen aus Polyethylen (PE), Polypropylen (PP) mit einer Temperatur, die über der Glasübergangstemperatur des jeweiligen Kunststoffes liegt angewendet werden.

Die in Anspruch 2 beschriebenen Temperaturbereiche haben sich insbesondere für die Wärmebehandlung von EPS als vorteilhaft erwiesen da bei diesen Temperaturen die Gefahr einer unbeabsichtigten Zerstörung des Körpers durch zu lange Einwirkdauern sehr gering ist und die Gefügeveränderung sehr gleichmäßig über den gesamten Querschnitt erfolgt.

Das Verfahren kann gemäß Anspruch 3 vorteilhaft bei Umgebungsdruck erfolgen, wodurch auch einfach aufgebaute Geräte, in denen die Wärmebehandlung durchgeführt wird, eingesetzt werden können.

Gemäß einer Weiterbildung des Verfahrens nach Anspruch 4 kann die Wärmebehandlung aber auch bei einem anderen Druck durchgeführt werden, wodurch die Geschwindigkeit der Volumenreduktion verringert oder erhöht werden kann, beispielsweise um durch abgesenkten Druck die Gefahr der Rissbildung zu verringern oder durch erhöhten Druck die Dauer der Wärmebehandlung zu verkürzen. Die Wärmebehandlung wird in diesem Fall in einem druckdichten Behälter, der geeignet ist, die entstehenden Druckkräfte aufzunehmen, durchgeführt. Die Einstellung des Druckes erfolgt zweckmäßig mittels einer mit dem Innenraum des Behälters verbundenen Pumpe und einer einstellbaren Druckregeleinrichtung. Es ist aber auch möglich einen Überdruck durch Anschluss an ein bestehendes Druckluftversorgungsnetz herzustellen.

Eine vorteilhafte Weiterbildung des Verfahrens besteht auch in den Maßnahmen des Anspruchs 5, wodurch der Körper während der Wärmebehandlung von der biegeweichen Hülle enganliegend umschlossen wird und die Hülle durch den höheren, äußeren Umgebungsdruck einen weitgehend gleichmäßigen Druck auf die Oberfläche des Körpers ausübt. Dadurch kann die erforderliche Dauer der Wärmebehandlung deutlich verkürzt werden, da den inneren Schrumpfspannungen eine zusätzliche Druckspannung überlagert wird und der Schrumpfvorgang bei gleicher Temperatur der Wärmebehandlung schneller abläuft. Eine durch die Volumensreduktion des Körpers eintretende Faltenbildung der Hülle ist dabei nicht von Bedeutung, da geringfügige Ungleichmäßigkeiten in der Oberfläche des wärmebehandelten Körpers seine mechanischen Eigenschaften insgesamt nicht verändern. Zur Aufrechterhaltung des Unterdrucks ist das Innere der Hülle über eine Verbindungsleitung mit einem Vakuumerzeuger verbunden.

Eine weitere Möglichkeit die benötigte Dauer der Wärmebehandlung zu verkürzen besteht nach Anspruch 6 darin, den Körper während der Wärmebehandlung durch eine Druckplatte zu belasten. Den inneren Schrumpfspannungen wird in diesem Fall eine weitgehend einachsige Druckspannung überlagert, wodurch der Schrumpfvorgang schneller abläuft. Auf den Körper wirkt dabei im einfachsten Fall das Eigengewicht der Druckplatte, abweichend davon kann diese Gewichtskraft zusätzlich durch Federkräfte einer federnden Einspannung der Druckplatte verstärkt oder reduziert werden. Die Eigenschaften, insbesondere die mechanischen Festigkeitswerte des Schaumstoffprodukts sind bei dieser Form der Wärmebehandlung nicht so gleichmäßig, wie ohne diese zusätzliche, einachsige Druckspannung, kann aber, wenn die Belastungsrichtung im Gebrauch der Belastung während er Wärmebehandlung entspricht, höhere Festigkeitswerte in dieser Richtung bewirken.

Die Wärmeübertragung auf den Körper aus expandiertem, geschlossenzelligem Schaumstoff erfolgt gemäß Anspruch 7 durch Konvektion, d.h. Umströmung mit einem Fluid entsprechender Temperatur. Als Fluid für die Wärmebehandlung kann insbesondere Luft, Wasser, Wasserdampf oder ein Luft-Wasserdampf-Gemisch gewählt werden. Darüber hinaus kann auch jeder andere gasförmige oder flüssige Stoff zur Wärmebehandlung verwendet werden, der den Schaumstoff nicht durch chemische Reaktionen nachteilig beeinflusst, z.B. bestimmte Lösemittel.

Nach Anspruch 8 kann zur Erwärmung des Körpers aus expandiertem, geschlossenzelligem Schaumstoff auch Wärmestrahlung eingesetzt werden. Die Strahlungsleistung darf dazu nur so hoch gewählt werden, dass die Oberfläche des Schaumstoffes nicht schmilzt.

Gemäß Anspruch 9 besteht eine vorteilhafte Weiterbildung des Verfahrens darin, Wärme durch hochfrequente, elektromagnetische Strahlung, z.B. Mikrowellenstrahlen auf den Körper aus expandiertem, geschlossenzelligem Schaumstoff zu übertragen. Bei einer typischen Schwingungsfrequenz von 2,45 GHz werden Wassermoleküle zum Schwingen angeregt, wodurch sich die Temperatur erhöht. Für diese Form der Wärmeübertragung ist ein zumindest geringer Wassergehalt im Schaumstoff erforderlich, was aber direkt nach der Herstellung durch die enthaltene Restfeuchte gegeben ist. Vorteilhaft bei dieser Ausführung des Verfahrens ist, dass die Erwärmung nicht durch Wärmeleitung von der Oberfläche in das Innere erfolgt, sondern der gesamte Querschnitt des Körpers, der sich im Wirkbereich der Strahlung befindet gleichzeitig und gleichmäßig erwärmt werden kann. Dadurch kann die Dauer der Wärmebehandlung verkürzt sowie der Energieverlust durch Wärmeverluste während der Wärmebehandlung verringert werden. Auch bei dieser Form des Verfahrens ist die eingebrachte Wärmeleistung so zu begrenzen, dass die Schmelztemperatur des Schaumstoffs nicht überschritten wird. Dies kann zweckmäßig durch wiederholtes Unterbrechen der Mikrowellenstrahlung erfolgen, wodurch sich Temperaturunterschiede im Inneren des Körpers gut ausgleichen können. Neben der von der Herstellung herrührenden Restfeuchte, können auch andere Stoffe, die in einem hochfrequenten, elektromagnetischen Strahlungsfeld ein dipolares Verhalten zeigen und sich dadurch erwärmen, schon bei der Herstellung in den Schaumstoff eingearbeitet werden, um diese Form der Energieübertragung auf den Körper anwenden zu können.

Die in Anspruch 10 angeführte Veränderung der Lage des Schaumstoffkörpers während der Wärmebehandlung dient dazu, ein gleichmäßigeres Schrumpfen des Schaumstoffkörpers zu erzielen. Die Auflage- und Reibungskräfte des Körpers beim Kontakt mit der Unterlage können den Schrumpfungsprozess im Kontaktbereich des Schaumstoffkörpers hemmen und ungleichmäßige Werkstoffeigenschaften verursachen. Es ist deshalb vorteilhaft, den Schaumstoffkörper während der Wärmebehandlung zumindest einmal in seiner Lage relativ zur Unterlage so zu verändern, dass ein anderer Teil der Körperoberfläche die Kontaktfläche mit der Unterlage bildet. Dies kann durch ein- oder mehrfaches Wenden des Schaumstoffkörpers erfolgen. Es kann aber auch dadurch erreicht werden, dass der Schaumstoffkörper z.B. in einer käfigartigen Aufnahme gelagert ist, die um eine horizontale Achse gedreht wird.

Zur Senkung von Reibungskräften zwischen dem Körper und der Unterlage, ist es gemäß Anspruch 11 vorteilhaft, eine reibungshemmende Auflage einzusetzen. Diese kann z.B. durch zwei oder mehrere lose aufeinanderliegende Folien gebildet sein, die beim Schrumpfungsprozess aufeinander abgleiten. Alternativ kann auch eine Flüssigkeitsschicht, auf der der Körper schwimmt, oder die als Schmierstoff wirkt, eingesetzt werden. Bereiche, in denen die Flüssigkeit gegebenenfalls durch Kapillarwirkung in den Körper eintritt, können vor der Verwendung des Körpers entfernt werden. Weiters kann die Auflage durch Wälzkörper, insbesondere eine Vielzahl von Kugeln gebildet sein, durch die eine zwischen Körper und Unterlage wirkende Gleitreibung durch eine geringere Wälzreibung ersetzt wird. Auch Kombinationen der vorgenannten Maßnahmen können zur Verminderung der Reibung eingesetzt werden.

Eine weitere Möglichkeit, den Einfluss von Reibungs- und Auflagerkräften zu vermeiden, ist gemäß Anspruch 12 eine hängende Lagerung des Schaumstoffkörpers während der Wärmebehandlung.

Die Zeitdauer der Wärmebehandlung wird gemäß Anspruch 13 vorteilhaft aus einem Bereich mit einer unteren Grenze von 1 h, vorzugsweise 12 h, insbesondere 24 h und einer oberen Grenze von 168 h, vorzugsweise 72 h, insbesondere 48 h gewählt, wobei sich die kürzeren Wärmebehandlungsdauern für Schaumstoffkörper mit kleinerem Volumen und längere Wärmebehandlungsdauern für Körper von größerem Volumen als vorteilhaft erweisen. Diese langen Wärmebehandlungsdauern ermöglichen, den Grad der Volumenreduktion während des Verfahrensablaufes einfach zu überwachen durch Ermittlung der Abmessungen des Schaumstoffkörpers. Dies kann durch einfache Längenmessungen von Hand oder durch im Wärmebehandlungsraum angeordnete automatische Messvorrichtungen, z.B. optische Meßsysteme, die bei Unterschreiten einer voreingestellten Höhe des Schaumstoffkörpers - und damit Erreichen einer bestimmten Volumenreduktion - die Beendigung des Wärmebehandlungsverfahrens auslösen.

Gemäß Anspruch 14 ist das erfindungsgemäße Schaumstoffprodukt aus einem wärmebehandelten, expandierten, geschlossenzelligen Schaumstoff, insbesondere expandiertem Polystyrol-Partikelschaum, durch den, durch die Wärmebehandlung bedingten Grad der Volumenreduktion gekennzeichnet. Durch das vorhin beschriebene Verfahren kann das Volumen des Schaumstoffprodukts gegenüber dem Ausgangszustand vor der Wärmebehandlung um einen Wert, gewählt aus einem Bereich zwischen einer unteren Grenze von 50 % und einer oberen Grenze von 97 % reduziert sein. Das entspricht einer Erhöhung der Dichte um einen Faktor zwischen dem zweifachen und dem 33fachen der Dichte des Ausgangszustandes vor der Wärmebehandlung.

Die durch die Wärmebehandlung gemäß Anspruch 15 eingestellte Dichte des Schaumstoffprodukts bewirkt, dass auch die Eigenschaften des Schaumstoffprodukts, wie z.B. Festigkeitswerte oder Wärmeleitfähigkeit gemäß den Ansprüchen 16 bis 19 innerhalb entsprechend weiter Bereiche liegen.

Durch die nach der Wärmebehandlung stark erhöhten Festigkeitswerte des Schaumstoffprodukts gegenüber dem Ausgangszustand kann das Schaumstoffprodukt gemäß den Ansprüchen 20 und 21 vorteilhaft als Konstruktionsmaterial für Anwendungsfälle verwendet werden, für die ein unbehandelter Schaumstoff zu geringe Festigkeitswerte aufweist, weshalb hier bisher auf andere, teure Werkstoffe, wie z.B. Schaumglas, zurückgegriffen werden musste. Gegenüber dem sehr spröden Schaumglas besitzt das Schaumstoffprodukt gute Elastizität und Zähigkeit, wodurch die Bruchgefahr bei der Verarbeitung und durch im Gebrauch auftretende Verformungen und Stoßbelastungen vergleichsweise gering ist. Die Wärmeleitfähigkeit des Schaumstoffprodukts beträgt bei einer Dichte von etwa 750 kg/m³ etwa 0,1 W/mK, wodurch sich insbesondere die Verwendung des Schaumstoffproduktes zur Herstellung von Dämmelementen für Baukonstruktionen, insbesondere zur wärmetechnischen Entkopplung von tragenden Bauteilen vom Auflager anbietet. Die Verwendung ist aber auch in allen anderen technischen Anwendungsgebieten, wie z.B. Fahrzeugbau oder Konsumgüterindustrie möglich.

Durch die gegenüber dem Ausgangsprodukt weiter verringerte Wasseraufnahmefähigkeit kann das Schaumstoffprodukt gemäß Anspruch 22 auch zur Herstellung von Gegenständen zur Erzeugung von Auftrieb in Flüssigkeiten verwendet werden. Der Dichtebereich des Schaumstoffprodukts überschneidet sich in weiten Bereichen mit dem Dichtebereich von Holzprodukten, wobei das Schaumstoffprodukt nicht der Gefahr der Fäulnis durch Feuchtigkeitseinfluss unterliegt.

Zum besseren Verständnis des erfindungsgemäßen Schaumstoffprodukts werden die Merkmale des Herstellungsverfahrens, bestimmte Eigenschaften und die Verwendung einer speziellen Ausführungsform des Schaumstoffprodukts anhand der nachfolgenden Figuren näher beschrieben.

Es zeigen:
- Fig. 1: eine schematische Darstellung des Verfahrens zur Herstellung des erfindungsgemäßen Schaumstoffprodukts;
- Fig. 2: den Zusammenhang zwischen Druckfestigkeit und Rohdichte des erfindungsgemäßen Schaumstoffprodukts;
- Fig. 3: den Zusammenhang zwischen Wärmeleitfähigkeit und Rohdichte des erfindungsgemäßen Schaumstoffprodukts;
- Fig. 4: eine andere Ausführungsform des Verfahrens in vereinfachter, schematischer Darstellung;
- Fig. 5: eine weitere Ausführungsform des Verfahrens in vereinfachter, schematischer Darstellung.

Einführen sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Des weiteren können auch Einzelmerkmale oder Merkmalskombinationen aus den gezeigten oder beschriebenen unterschiedlichen Ausführungsbeispielen für sich eigenständige, erfinderische oder erfindungsgemäße Lösungen darstellen.

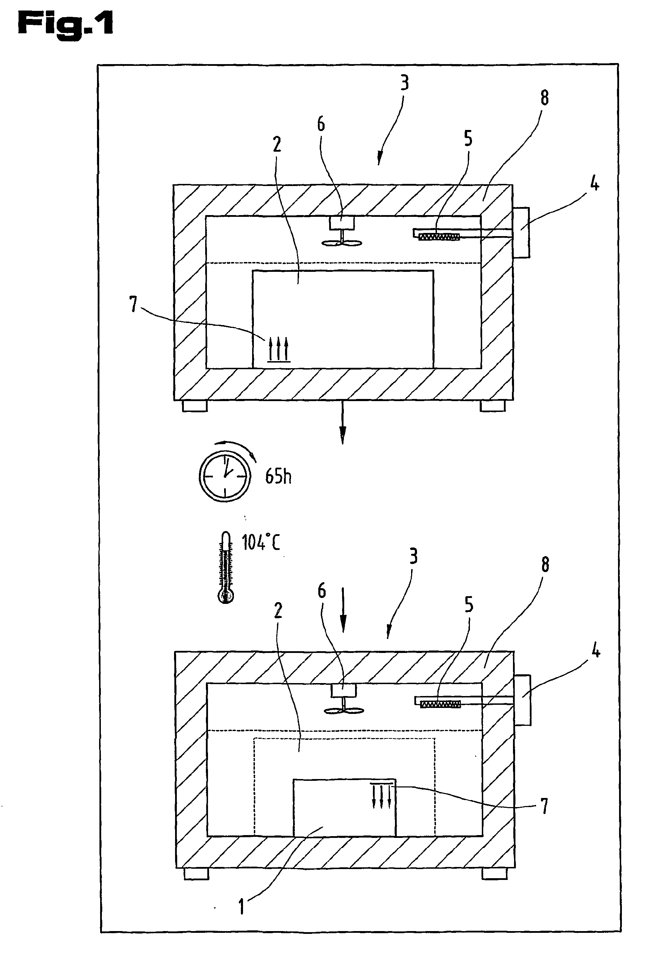

Fig. 1 zeigt in schematischer Darstellung das Verfahren zur Herstellung des erfindungsgemäßen Schaumstoffprodukts 1 mit nachfolgend beschriebenen, bestimmten Eigenschaften durch eine Wärmebehandlung eines Körpers 2 aus expandiertem, geschlossenzelligem Schaumstoff. Der Körper 2 ist in diesem Beispiel ein Quader aus expandiertem Polystyrol (EPS) mit einer Dichte von 30 kg/m³. Seine Abmessungen betragen 70 cm x 50 cm x 50 cm und sein Gewicht, das sich durch die Wärmebehandlung nicht verändert, beträgt 5,25 kg. Durch Schwankungen in den Parametern der Herstellung des Ausgangsmaterials sind Schwankungen der Eigenschaften zwischen verschiedenen Chargen, insbesondere der Dichte, aber auch der Festigkeitswerte möglich. Zum Beispiel kann die Festigkeit des EPS durch eine schlechtere Verschweißung der vorgeschäumten Partikel beim Ausschäumen herabgesetzt sein. Auf etwaige Qualitätsmängel des Ausgangsmaterials wird jedoch an dieser Stelle nicht näher eingegangen.

Zur Durchführung der Wärmebehandlung wird der Körper 2 aus EPS in einen Ofen 3 mit Temperaturregeleinrichtung 4 zur Ansteuerung eines Heizelements 5 und Umlufteinrichtung 6 verbracht. Um die Volumenreduktion des Körpers 2 aus EPS langsam und gleichmäßig einzuleiten und aufgrund der langsamen Wärmeleitung innerhalb des Körpers 2 wird die Temperatur im Ofen 3 und damit auch im Körper 2 langsam auf die Wärmebehandlungstemperatur erhöht. Um den Zeitbedarf zur Durchführung des Verfahren zu verringern hat sich ein Vorheizen des Ofens auf etwa 80 °C (Beginn des Glasübergangsbereiches) für den Beginn der Wärmebehandlung und eine anschließende Temperaturerhöhung auf den vorgesehenen Wert als vorteilhaft erwiesen. Die Temperatur im Ofen 3 wird während der Wärmebehandlung von der Temperaturregeleinrichtung 4 möglichst gleichmäßig auf einem Wert von 104 °C gehalten. Schwankungen der Temperatur, die innerhalb der Regelungsgenauigkeit üblicher Temperaturregelungen liegen, zeigen nur insofern Auswirkungen, dass die Volumenreduktion durch höhere Temperaturen beschleunigt wird und eine insgesamt höhere Kontraktion erreicht wird, wogegen niedrigere Temperaturen die Volumenreduktion verlangsamen und insgesamt eine niedrigere Kontraktion erreicht wird. Durch die Temperaturerhöhung des Körpers 2 über die Glasübergangstemperatur von Polystyrol, die in einem Bereich zwischen 80° C und 90° C liegt, beginnen sich innere Spannungen im EPS, die bei seiner Herstellung durch das Abkühlen unter die Glasübergangstemperatur quasi eingefroren wurden, durch ein langsames und gleichmäßiges Schrumpfen der Schaumstoffstruktur abzubauen. Die die Zellstruktur des Schaumstoffes bildenden Wände und Membranen verkürzen sich dabei, während ihre Dicke aufgrund der Volumenkonstanz zunimmt. Der Durchmesser der expandierten und miteinander verschweißten Partikel nimmt dementsprechend ab, wodurch der Körper 2 insgesamt eine Volumenreduktion erfährt.

Zur Verringerung des Einflusses der Auflagerkräfte auf den Schrumpfvorgang wird der Körper 2 während der Wärmebehandlung im Abstand von jeweils 6 h mehrmals gewendet, wodurch die Volumenreduktion im ganzen Körper 2 gleichmäßiger erfolgen kann. In Fig. 1 ist dieser Wendevorgang durch die veränderte Lage einer Markierung 7 erkennbar.

Nach einer Wärmebehandlungsdauer von 65 h wird das aus dem Körper 2 aus expandiertem Polystyrol entstandene Schaumstoffprodukt 1 aus dem Ofen 3 entnommen, wobei dieses eine über die Abmessungen berechnete Dichte von 230 kg/m³ aufweist und dementsprechend eine Volumenureduktion von etwa 87 % gegenüber dem Ausgangsvolumen erfahren hat. Zu diesem Zeitpunkt ist die bei der eingestellten Temperatur von 104 °C erreichbare Volumenreduktion weitgehend abgeschlossen. Dies ist unter anderem damit begründbar, dass ein Gleichgewicht zwischen den sich durch die Volumenreduktion abbauenden Schrumpfspannungen und der gestiegenen Festigkeit der Schaumstoffstruktur erreicht ist. Eine weitere Volumenreduktion kann von diesem Zustand aus nur durch eine weitere Wärmebehandlung nach Erhöhung der Temperatur im Ofen 3 erfolgen. Durch eine höhere Temperatur steigt der Anteil der Makromoleküle, die sich aus der durch die Expansion gestreckten Lage durch Zusammenziehen wieder der Lage vor der Expansion - nach der Polymerisation - annähern wollen, wodurch in Summe eine erhöhte Schrumpfspannung hervorgerufen wird, die erst nach einer weiteren Schrumpfung und einer damit einhergehenden Verfestigung wieder ausgeglichen werden. Wird die Temperatur jedoch zu hoch gewählt, wird dieser Anteil zu hoch, die zellige Struktur kollabiert und der Schrumpfvorgang geht in ein Schmelzen über. Die den Körper 2 aus EPS bildenden, miteinander verschweißten Schaumstoffpartikel zeigen während der Wärmebehandlung eine Art von Formgedächtniseffekt, indem sie sich tendenziell der Form des Granulats vor dem Expandieren wieder annähern.

Wie bereits erwähnt, kann das Verfahren auch durch Veränderung der Temperatur, bei der die Wärmebehandlung durchgeführt wird, beeinflusst werden. Die Eigenschaften des Schaumstoffprodukts 1 hängen im wesentlichen vom Ausgangsmaterial, von der Temperatur der Wärmebehandlung und der Dauer der Wärmebehandlung ab, wobei ein bestimmtes Ergebnis einfach durch Variation der Wärmebehandlungsdauer und/oder der Temperatur erreicht wird.

Aufgrund der Schwankungen des Ausgangsmaterials kann die erforderliche Dauer und die erforderliche Temperatur der Wärmebehandlung zur Erreichung einer bestimmten Volumenreduktion ebenfalls Schwankungen unterworfen sein, durch wiederholte Messungen der Dimensionen des Schaumstoffproduktes 1 kann aber die bis zum Messzeitpunkt erreichte Volumenreduktion einfach berechnet und die Wärmebehandlung nach Erreichen des gewünschten Zielwertes abgebrochen werden. Durch die von außen nach innen erfolgende Abkühlung wird die Volumenkontraktion des Körpers 2 durch Unterschreiten der Glasübergangstemperatur wieder beendet.

Für eine wirtschaftliche Durchführung des Verfahrens und einen niedrigen Energiebedarf zur Wärmebehandlung des Körpers 2 aus expandiertem Schaumstoff ist der verwendete Ofen 3 mit einer Wärmedämmschicht 8 ausgestattet. Gute Wärmedämmung oder anderweitige Nutzung von anfallenden Wärmeverlusten des Ofens 3 erhöht die Wirtschaftlichkeit des Verfahrens.

Die folgende Tabelle zeigt die durch das Verfahren gegenüber dem Ausgangszustand stark veränderten Eigenschaften des beschriebenen, erfindungsgemäßen Schaumstoffprodukts 1 (Produkt A) sowie einer weiteren Ausführungsform (Produkt B).

**Tab. Eigenschaften EPS unbehandelt, Produkt A und Produkt B**

| Merkmal Einheit | EPS - unbehandelt | Produkt A | Produkt B |
|---|---|---|---|
| Wärmebehandlung Dauer h | - | 65 | 38 |
| Wärmebehandlungs-temperatur °C | - | 104 | 105 |
| Dichte kg/m³ | 30 | 230 | 475 |
| Wärmeleitfähigkeit W/mK (ASTM F433) | 0,033 | 0,046 | 0,064 |
| Druckfestigkeit kPa (EN 826) | 250 (bei 10 % Stauchung) | 3800 (bei 3 % Stauchung) | 10800 (bei 3 % Stauchung) |
| max. Stauchung aus Kriechen bei 50 % d. Druckfest. | - | 0,00818 | 0,00171 |
| Zugfestigkeit kPa | 480 | 1490 | 4200 |
| Biegezugfestigkeit kPa | 490 | 3150 | 8450 |

Wie aus der Tabelle ersichtlich, kann durch eine geringe Veränderung der Temperatur der Wärmebehandlung die Geschwindigkeit der Volumenreduktion stark beeinflusst werden. Die nur wenig höhere Temperatur bei der Wärmebehandlung zur Herstellung des Produkts B hat in deutlich kürzerer Zeit eine höhere Dichte und höhere mechanische Festigkeiten ergeben.

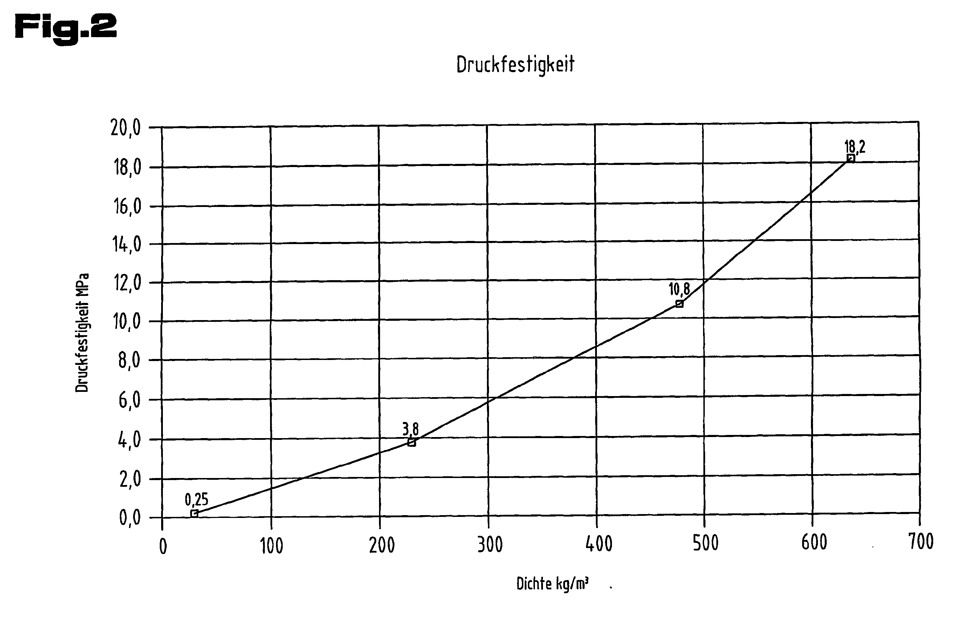

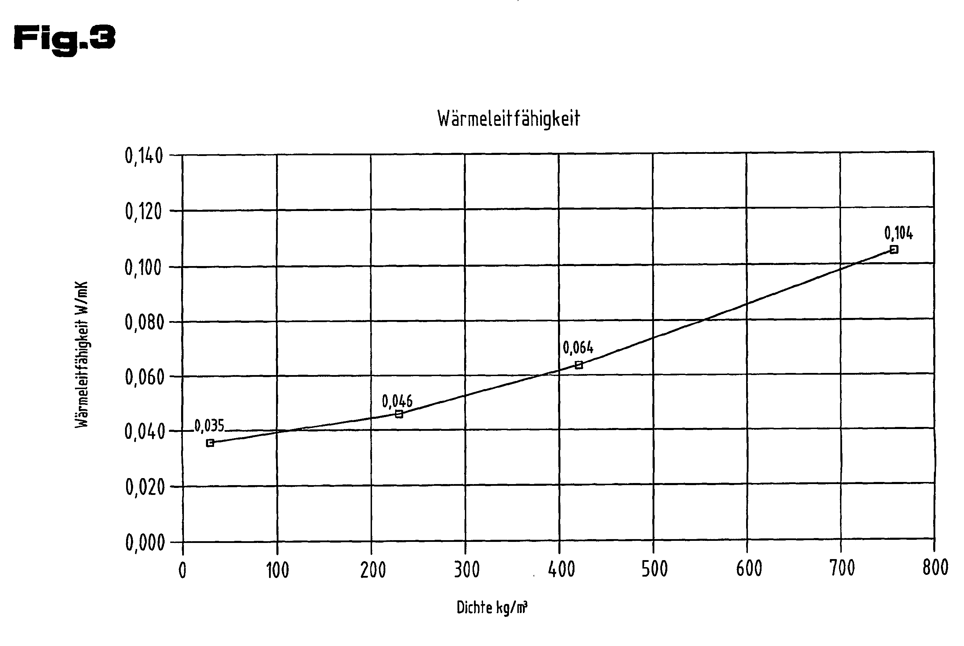

Die mechanische Festigkeit des erfindungsgemäßen Schaumstoffprodukts 1 kann durch stärkere Volumenreduktion und damit einhergehender Erhöhung der Dichte, wie in Fig. 2 am Beispiel der Druckfestigkeit dargestellt, noch weiter angehoben werden. Gleichzeitig steigt, wie aus Fig. 3 entnommen werden kann, die Wärmeleitfähigkeit des Schaumstoffprodukts 1 mit steigender Dichte an.

Das quaderförmige Schaumstoffprodukt 1 wird mittels der bekannten Verfahren zur Kunststoffbearbeitung, insbesondere Schneiden, Sägen und Fräsen, zu gebrauchsfähigen Produkten, insbesondere Plattenmaterial weiterverarbeitet. Das Verfahren ist auf Ausgangskörper jeder beliebigen Form anwendbar, wobei allerdings zu berücksichtigen ist, dass bei Körpern 2 die gleichzeitig dicke sowie dünne Wandstärken aufweisen die Volumenreduktion in den dünnwandigen Bereichen aufgrund der schnelleren Durchwärmung früher einsetzt und in diesem Fall die Temperaturerhöhung am Beginn der Wärmebehandlung besonders langsam erfolgen soll. Durch die gleichmäßige Volumenreduktion entspricht die Form des Schaumstoffproduktes 1 bis auf die Größe weitgehend der Ausgangsform. Wird das Schaumstoffprodukt 1 in Plattenform benötigt, ist es vorteilhaft, plattenformige Körper 2 aus EPS zu verwenden, wodurch die Wärmebehandlung verkürzt sowie die Formgebung nach der Wärmebehandlung vereinfacht werden kann.

Die erhöhten Werte der mechanischen Festigkeit bei gleichzeitig niedriger Wärmeleitfähigkeit ermöglichen eine Verwendung des beschriebenen Schaumstoffprodukts 1 als Wärmedämmschicht für z.B. durch Verkehrslasten druckbelastete Flachdächer oder als tragendes Wärmedämmelement zur Vermeidung von Wärmebrücken an Gebäudesockeln. Weiters kann das Schaumstoffprodukt 1 zur wärmetechnischen Entkopplung von tragenden Bauteilen vom Auflager, beispielsweise zwischen Stützen und Decken eingesetzt werden.

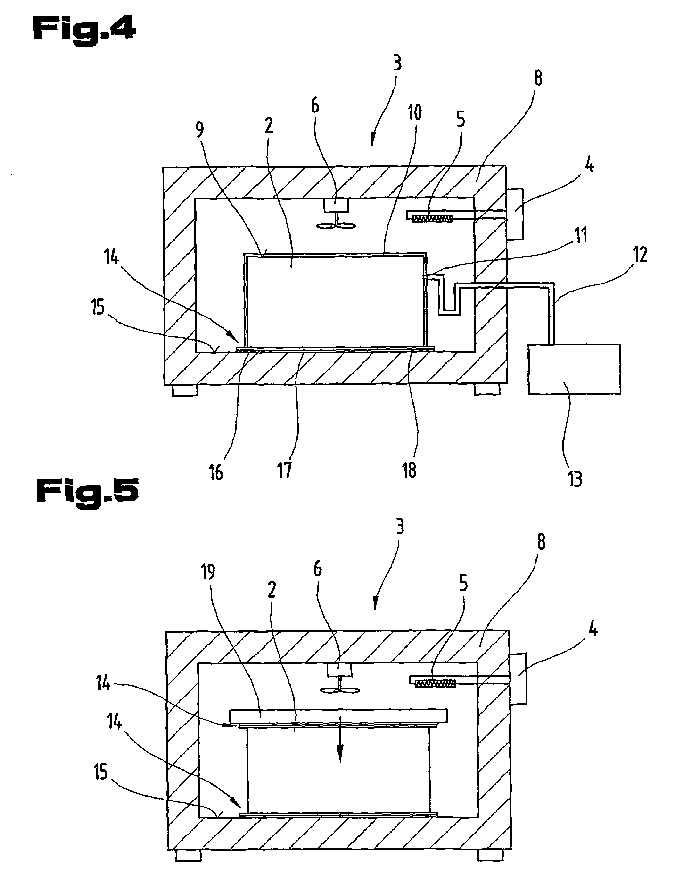

Fig. 4 zeigt eine weitere Ausführungsform des Verfahrens mit speziellen Maßnahmen zur Druckaufbringung auf den Körper 2 sowie zur Verringerung der Reibung zwischen Körper 2 und der Unterlage.

Um die Dauer der Wärmebehandlung zu senken, ist dabei vorgesehen, während der Wärmebehandlung zumindest über einen Teil der Dauer auf die Oberfläche 9 des Körpers 2 einen weitgehend gleichmäßigen Druck auszuüben, der sich den Schrumpfspannungen in den Zellwänden der Schaumstoffpartikel überlagert und dadurch den Schrumpfvorgang beschleunigt. Dazu wird der Körper 2 vollständig in einer biegeweichen Hülle 10 eingeschlossen, innerhalb derer ein Unterdruck gegenüber dem Umgebungsdruck außerhalb der Hülle 10 herrscht. Dazu wird das Innere der Hülle 10 über ein Anschlussstück 11 und eine Verbindungsleitung 12 mit einem beliebigen Vakuumerzeuger 13 verbunden, mit dem ein absoluter Druck zwischen 0,2 bar und dem Umgebungsdruck, insbesondere aber ein Unterdruck von 0,4 bar bis 0,8 bar innerhalb der Hülle 10 eingestellt und aufrechterhalten wird.

Weiters zeigt Fig. 4 eine Zwischenlage 14, die zwischen Körper 2 und einer Unterlagsfläche 15 angeordnet ist, um Reibungseinflüsse beim Schrumpfungsprozess zu verringern. Diese Zwischenlage 14 ist im Ausführungsbeispiel durch zwei Lagen gebildet, wobei die obere Lage 16 aus einer dünnen, biegeweichen Metallfolie besteht, während die untere Lage 17 durch eine glatte Papierschicht gebildet ist. Beim Schrumpfen des Körpers 2 gleitet die obere Lage 16 auf der unteren Lage 17 und wird vom schrumpfenden Körper zusammengeschoben. Die Zwischenlage 14 kann auch teilweise oder zur Gänze aus einer Flüssigkeitsschicht bestehen, die zwischen Körper 2 und der Unterlagsfläche 15 einen Schmierfilm bildet. Darüber hinaus kann die Zwischenlage 15 auch in Fig. 4 angedeutete Wälzkörper 18 enthalten, die die Reibung zwischen Körper 2 und der Unterlagsfläche 15 herabsetzen. Die durch diese Maßnahmen reduzierten Reibungskräfte wirken sich auf den Schrumpfungsprozess nicht mehr störend aus und das fertige Schaumstoffprodukt 1 besitzt über seine Höhe gleichmäßigere Eigenschaften.

In Fig. 5 ist eine weitere Ausführungsart des Verfahrens dargestellt, bei dem der Körper 2 während der Wärmebehandlung durch eine Druckplatte 19 belastet wird, die auf der Oberseite eines quaderförmige Körpers 2 aufliegt. Durch die Gewichtskraft der Druckplatte 19 wird den inneren Schrumpfspannungen während der Wärmebehandlung eine weitgehend einachsige Druckspannung überlagert, wodurch der Schrumpfvorgang schneller abläuft. Auf den Körper 2 wirkt dabei im dargestellten Beispiel das Eigengewicht der Druckplatte 19, abweichend davon kann diese Gewichtskraft zusätzlich durch Federkräfte einer federnden Einspannung der Druckplatte verstärkt oder reduziert werden.

Auch bei dieser Ausführungsform der Wärmebehandlung kann der Einfluss von Reibungskräften auf den Schrumpfungsprozess durch Verwendung von Zwischenlagen 14, einerseits zwischen Körper 2 und Unterlagsfläche 15 und/oder Körper 2 und Druckplatte 19 verringert werden.

Das erfindungsgemäße Schaumstoffprodukt 1 kann neben der beschriebenen Verwendung als Konstruktionswerkstoff auch in allen anderen Anwendungsfällen, in denen eine Kombination von guten Wärmedämmeigenschaften und geringer Dichte bei gleichzeitig hohen mechanischen Festigkeiten vorteilhaft ist, eingesetzt werden.

## Patentansprüche

1. Verfahren zur Herstellung eines Schaumstoffprodukts (1) bei dem ein Körper (2) aus expandiertem geschlossenzelligem Schaumstoff, insbesondere expandiertem Polystyrol-Partikelschaum, einer nicht schmelzenden Wärmebehandlung bei einer Temperatur über der Glasübergangstemperatur des den Schaumstoff bildenden Kunststoffes, insbesondere von Polystyrol, unterzogen wird, **dadurch gekennzeichnet, dass** das Volumen des Schaumstoffprodukts (1) durch die Wärmebehandlung gegenüber dem Ausgangszustand vor der Wärmebehandlung um einen Wert aus einem Bereich mit einer unteren Grenze von 50 %, vorzugsweise 75 %, insbesondere 85 % und einer oberen Grenze von 97 %, vorzugsweise 96,5 %, insbesondere 96 % reduziert wird.

2. Verfahren nach Anspruch 1, **dadurch gekennzeichnet, dass** die Temperatur bei der Wärmebehandlung ausgewählt ist aus einem Bereich mit einer unteren Grenze von 90 °C, insbesondere 100 °C, vorzugsweise 103°C, und einer oberen Grenze von 130 °C, insbesondere 120 °C, vorzugsweise 108 °C.

3. Verfahren nach Anspruch 1 oder 2, **dadurch gekennzeichnet, dass** die Wärmebehandlung bei Umgebungsdruck erfolgt.

4. Verfahren nach einem der Ansprüche 1 oder 2, **dadurch gekennzeichnet, dass** die Wärmebehandlung bei einem absoluten Druck zwischen einer unteren Grenze von 0,8 bar und einer oberen Grenze von 8,0 bar erfolgt.

5. Verfahren nach einem der Ansprüche 1 oder 2, **dadurch gekennzeichnet, dass** der Körper (2) zumindest während eines Teiles der Wärmebehandlung in einer weitgehend druckdichten, biegeweichen Hülle (10), insbesondere einer Metallfolie oder einer Kunststoffmembran, eingeschlossen ist und innerhalb der Hülle (10) ein absoluter Druck ausgewählt aus einem Bereich mit einer unteren Grenze von 0,2 bar und einer oberen Grenze die dem Umgebungsdruck außerhalb der Hülle (10) entspricht, herrscht.

6. Verfahren nach einem der vorhergehenden Ansprüche, **dadurch gekennzeichnet, dass** der Körper (2) zumindest während eines Teiles der Wärmebehandlung mittels einer Druckplatte (19) einem zwischen Unterlage und Druckplatte (19) wirkenden Druckspannungszustand ausgesetzt wird.

7. Verfahren nach einem der vorhergehenden Ansprüche, **dadurch gekennzeichnet, dass** die Wärmebehandlung in einem Fluid erfolgt, wobei das Fluid insbesondere aus der Gruppe von Luft, Wasser, Wasserdampf und Luft-Wasserdampf-Gemisch gewählt ist.

8. Verfahren nach einem der vorhergehenden Ansprüche, **dadurch gekennzeichnet, dass** Wärme durch Wärmestrahlung auf den Körper (2) aus expandiertem geschlossenzelligem Schaumstoff, insbesondere aus expandiertem Polystyrol-Partikelschaum übertragen wird.

9. Verfahren nach einem der vorhergehenden Ansprüche, **dadurch gekennzeichnet, dass** der expandierte geschlossenzellige Schaumstoff über das Volumen weitgehend gleichmäßig verteilte Bestandteile enthält, die sich unter dem Einfluss von hochfrequenter elektromagnetischer Strahlung erhitzen und Wärme durch hochfrequente elektromagnetische Strahlung auf den Körper (2) aus expandiertem geschlossenzelligem Schaumstoff, insbesondere aus expandiertem Polystyrol-Partikelschaum übertragen wird.

10. Verfahren nach einem der vorhergehenden Ansprüche, **dadurch gekennzeichnet, dass** der Körper (2) aus expandiertem geschlossenzelligem Schaumstoff, insbesondere expandiertem Polystyrol-Partikelschaum während der Wärmebehandlung zumindest einmal in seiner Lage relativ zu einer Unterlage so verändert wird, dass ein anderer Teil der Oberfläche des Körpers (2) die Kontaktfläche mit der Unterlage bildet.

11. Verfahren nach einem der Ansprüche 1 bis 10, **dadurch gekennzeichnet, dass** der Körper (2) während der Wärmebehandlung auf einer reibungshemmenden Zwischenlage (14), insbesondere auf einer oder mehreren gegenüber der Unterlage oder untereinander gleitfähigen Folien, einer Flüssigkeitsschicht, auf Rollkörpern oder einer Kombination dieser Mittel, gelagert ist.

12. Verfahren nach einem der Ansprüche 1 bis 9, **dadurch gekennzeichnet, dass** der Körper (2) aus expandiertem geschlossenzelligem Schaumstoff, insbesondere expandiertem Polystyrol-Partikelschaum, während der Wärmebehandlung zumindest an einem Punkt seiner Oberfläche hängend gelagert ist.

13. Verfahren nach einem der vorhergehenden Ansprüche, **dadurch gekennzeichnet, dass** die Zeitdauer der Wärmebehandlung aus einem Bereich mit einer unteren Grenze von 1 h und einer oberen Grenze von 168 h gewählt ist.

14. Schaumstoffprodukt (1) aus einem wärmebehandelten expandierten geschlossenzelligen Schaumstoff, insbesondere expandiertem Polystyrol-Partikelschaum, **dadurch gekennzeichnet, dass** das Volumen des Schaumstoffprodukts (1) durch eine Wärmebehandlung gegenüber dem Ausgangszustand vor der Wärmebehandlung um einen Wert aus einem Bereich zwischen einer unteren Grenze von 50 %, vorzugsweise 75 %, insbesondere 85 % und einer oberen Grenze von 97 %, vorzugsweise 96,5 %, insbesondere 96 % reduziert ist.

15. Schaumstoffprodukt (1) nach Anspruch 14, **dadurch gekennzeichnet, dass** die Dichte in einem Bereich zwischen einer unteren Grenze von 50 kg/m³ und einer oberen Grenze von 1000 kg/m³ liegt.

16. Schaumstoffprodukt (1) nach Anspruch 14 oder 15, **dadurch gekennzeichnet, dass** die Druckfestigkeit über 2 N/mm² bei weniger als 5 % Stauchung beträgt.

17. Schaumstoffprodukt (1) nach einem der Ansprüche 14 bis 16, **dadurch gekennzeichnet, dass** die Zugfestigkeit über 1,2 N/mm² beträgt.

18. Schaumstoffprodukt (1) nach einem der Ansprüche 14 bis 17, **dadurch gekennzeichnet, dass** die Biegezugfestigkeit über 3 N/mm² beträgt.

19. Schaumstoffprodukt (1) nach einem der Ansprüche 14 bis 18, **dadurch gekennzeichnet, dass** die Wärmeleitfähigkeit unter 0,1 W/mK beträgt.

20. Verwendung des Schaumstoffproduktes (1) nach einem der Ansprüche 14 bis 19 als Konstruktionsmaterial, insbesondere für Baukonstruktionen.

21. Verwendung des Schaumstoffproduktes (1) nach einem der Ansprüche 14 bis 19 zur Herstellung von Dämmelementen für Baukonstruktionen, insbesondere zur wärmetechnischen Entkopplung von tragenden Bauteilen vom Auflager.

22. Verwendung des Schaumstoffproduktes (1) nach einem der Ansprüche 14 bis 19 zur Herstellung von Gegenständen zur Erzeugung von Auftrieb in Flüssigkeiten.

## Claims

1. Method of producing a foam material product (1), whereby a body (2) of expanded, closed-cell foam, in particular expanded polystyrene particle foam, is subjected to a non-melting heat treatment at a temperature above the glass transition temperature of the plastic used to produce the foam material, in particular polystyrene, **characterised in that** the volume of the foam material product (1) is reduced by a value from a range with a lower limit of 50 %, preferably 75 %, in particular 85 %, and an upper limit of 97 %, preferably 96.5 %, in particular 96 %, by the heat treatment compared with an initial state prior to the heat treatment.

2. Method as claimed in claim 1, **characterised in that** the temperature during the heat treatment is selected from a range with a lower limit of 90 °C, in particular 100 °C, preferably 103 °C, and an upper limit of 130 °C, in particular 120 °C, preferably 108 °C.

3. Method as claimed in claim 1 or 2, **characterised in that** the heat treatment takes place at ambient pressure.

4. Method as claimed in one of claims 1 or 2, **characterised in that** the heat treatment takes place at an absolute pressure between a lower limit of 0.8 bar and an upper limit of 8.0 bar.

5. Method as claimed in one of claims 1 or 2, **characterised in that** the body (2) is enclosed in a substantially pressure-tight, flexible sleeve (10), in particular a metal sheet or a plastic membrane, during a part of the heat treatment and an absolute pressure prevailing inside the sleeve (10) is selected from a range with a lower limit of 0.2 bar and an upper limit corresponding to the ambient pressure outside the sleeve (10).

6. Method as claimed in one of the preceding claims, **characterised in that** the body (2) is exposed to a state of compressive stress by means of a pressing plate (19) acting between the underlying support and the pressing plate (19).

7. Method as claimed in one of the preceding claims, **characterised in that** the heat treatment takes place in a fluid and the fluid is selected in particular from the group comprising air, water, steam and an air-steam mixture.

8. Method as claimed in one of the preceding claims, **characterised in that** heat is transmitted to the body (2) of expanded closed-cell foam, in particular expanded polystyrene particle foam, by heat radiation.

9. Method as claimed in one of the preceding claims, **characterised in that** the expanded closed-cell foam contains elements distributed substantially uniformly through the volume which heat up under the influence of high-frequency electromagnetic radiation and heat is transmitted to the body (2) of expanded closed-cell foam, in particular expanded polystyrene particle foam, by high-frequency electromagnetic radiation.

10. Method as claimed in one of the preceding claims, **characterised in that** the position of the body (2) of expanded closed-cell foam, in particular expanded polystyrene particle foam, is changed relative to the underlying support at least once during the heat treatment so that a different part of the surface of the body (2) constitutes the contact surface with the underlying support.

11. Method as claimed in one of claims 1 to 10, **characterised in that** the body (2) is supported on a friction-inhibiting intermediate support (14) during the heat treatment, in particular on one or more sheets capable of sliding relative to the underlying support or relative to one another, a layer of liquid, roller bodies or a combination of these means.

12. Method as claimed in one of claims 1 to 9, **characterised in that** the body (2) of expanded closed-cell foam, in particular expanded polystyrene particle foam, is suspended from at least one point of its surface during the heat treatment.

13. Method as claimed in one of the preceding claims, **characterised in that** the duration of the heat treatment is selected from a range with a lower limit of 1 h and an upper limit of 168 h.

14. Foam material product (1) made from a heat-treated expanded closed-cell foam, in particular expanded polystyrene particle foam, **characterised in that** the volume of the foam material product (1) is reduced by a value from a range between a lower limit of 50 %, preferably 75 %, in particular 85 %, and an upper limit of 97 %, preferably 96.5 %, in particular 96 % by a heat treatment compared with the initial state prior to the heat treatment.

15. Foam material product (1) as claimed in claim 14, **characterised in that** the density is in a range between a lower limit of 50 kg/m³ and an upper limit of 1000 kg/m³.

16. Foam material product (1) as claimed in claim 14 or 15, **characterised in that** the compressive strength is in excess of 2 N/mm² at less than 5 % compression.

17. Foam material product (1) as claimed in one of claims 14 to 16, **characterised in that** the tensile strength is in excess of 1.2 N/mm².

18. Foam material product (1) as claimed in one of claims 14 to 17, **characterised in that** the flexural tensile strength is in excess of 3 N/mm².

19. Foam material product (1) as claimed in one of claims 14 to 18, **characterised in that** the heat conductivity is less than 0.1 W/mK.

20. Use of the foam material product (1) as claimed in one of claims 14 to 19 as a construction material, in particular for buildings.

21. Use of the foam material product (1) as claimed in one of claims 14 to 19 for producing insulating elements for buildings, in particular for uncoupling supporting components from the support bearing.

22. Use of the foam material product (1) as claimed in one of claims 14 to 19 for producing objects to create buoyancy in liquids.

## Revendications

1. Procédé de réalisation d'un produit alvéolaire (1), dans lequel un corps (2) en produit expansé à alvéoles fermées, en particulier en mousse de particules de polystyrène, est soumis à un traitement thermique n'entraînant pas de fusion, sous une température supérieure à la température de transition vitreuse de la matière plastique formant le produit alvéolaire, en particulier le polystyrène, **caractérisé en ce que**, sous l'effet du traitement thermique, le volume du produit alvéolaire (1) est diminué par rapport à l'état initial avant le traitement thermique selon une valeur située dans une plage de valeurs avec une limite inférieure de 50 %, de préférence 75 %, en particulier 85 %, et une limite supérieure de 97 %, de préférence 96,5 %, en particulier 96 %.

2. Procédé selon la revendication 1, **caractérisé en ce que** la température pendant le traitement thermique est choisie dans une plage de valeurs avec une limite inférieure de 90°C, de préférence 100°C, en particulier 103°C, et une limite supérieure de 130°C, de préférence 120°C, en particulier 108°C.

3. Procédé selon la revendication 1 ou 2, **caractérisé en ce que** le traitement thermique est effectué à la pression atmosphérique.

4. Procédé selon la revendication 1 ou 2, **caractérisé en ce que** le traitement thermique est effectué sous une pression absolue entre une limite inférieure de 0,8 bar et une limite supérieure de 8,0 bars.

5. Procédé selon la revendication 1 ou 2, **caractérisé en ce que** le corps (2), au moins pendant une partie du traitement thermique, est enfermé dans une enveloppe (10) flexible, largement étanche à la pression, en particulier une feuille métallique ou une membrane en matière plastique, et à l'intérieur de l'enveloppe (10) règne une pression absolue qui est choisie dans une plage de valeurs avec une limite inférieure de 0,2 bar et une limite supérieure qui correspond à la pression atmosphérique en dehors de l'enveloppe (10).

6. Procédé selon l'une quelconque des revendications précédentes, **caractérisé en ce que** le corps (2), au moins pendant une partie du traitement thermique, est soumis, au moyen d'une plaque de pression (19), à un état de contrainte de pression agissant entre une base et la plaque de pression (19).

7. Procédé selon l'une quelconque des revendications précédentes, **caractérisé en ce que** le traitement thermique est effectué dans un fluide, le fluide étant choisi en particulier dans le groupe comportant l'air, l'eau, la vapeur d'eau et un mélange d'air et de vapeur d'eau.

8. Procédé selon l'une quelconque des revendications précédentes, **caractérisé en ce que** la chaleur est transmise par rayonnement thermique sur le corps (2) en produit expansé à alvéoles fermées, en particulier en mousse de particules de polystyrène.

9. Procédé selon l'une quelconque des revendications précédentes, **caractérisé en ce que** le produit expansé à alvéoles fermées contient des composants répartis en grande partie uniformément sur le volume, lesquels se chauffent sous l'influence d'un rayonnement électromagnétique à haute fréquence et la chaleur est transmise sur le corps (2) en produit expansé à alvéoles fermées, en particulier en mousse de particules de polystyrène.

10. Procédé selon l'une quelconque des revendications précédentes, **caractérisé en ce que,** pendant le traitement thermique, la position du corps (2) en produit expansé à alvéoles fermées, en particulier en mousse de particules de polystyrène, est modifiée au moins une fois par rapport à une base, de telle sorte qu'une autre partie de la surface du corps (2) forme la surface de contact avec la base.

11. Procédé selon l'une quelconque des revendications 1 à 10, **caractérisé en ce que,** pendant le traitement thermique, le corps (2) est positionné sur un élément intercalaire (14) empêchant le frottement, en particulier sur une ou plusieurs feuilles, aptes à glisser par rapport à la base ou entre elles, une couche liquide, sur des corps de roulement ou sur une combinaison de ces moyens.

12. Procédé selon l'une quelconque des revendications 1 à 9, **caractérisé en ce que,** pendant le traitement thermique, le corps (2) en produit expansé à alvéoles fermées, en particulier en mousse de particules de polystyrène, est positionné en étant suspendu au moins à un point de sa surface.

13. Procédé selon l'une quelconque des revendications précédentes, **caractérisé en ce que** la durée du traitement thermique est choisie dans une plage de valeurs avec une limite inférieure de 1 h et une limite supérieure de 168 h.

14. Produit alvéolaire (1) réalisé en produit expansé à alvéoles fermées ayant subi un traitement thermique, en particulier en mousse de particules de polystyrène, **caractérisé en ce que**, sous l'effet d'un traitement thermique, le volume du produit alvéolaire (1) est diminué par rapport à l'état initial avant le traitement thermique selon une valeur située dans une plage de valeurs avec une limite inférieure de 50 %, de préférence 75 %, en particulier 85 %, et une limite supérieure de 97 %, de préférence 96,5 %, en particulier 96 %.

15. Produit alvéolaire (1) selon la revendication 14, **caractérisé en ce que** la densité se situe dans une plage de valeurs avec une limite inférieure de 50 kg/m³ et une limite supérieure de 1 000 kg/m³.

16. Produit alvéolaire (1) selon la revendication 14 ou 15, **caractérisé en ce que** la résistance à la pression est supérieure à 2 N/mm² avec un écrasement inférieur à 5 %.

17. Produit alvéolaire (1) selon l'une quelconque des revendications 14 à 16, **caractérisé en ce que** la résistance à la traction est supérieure à 1,2 N/mm².

18. Produit alvéolaire (1) selon l'une quelconque des revendications 14 à 17, **caractérisé en ce que** la résistance à la traction sous pliage est supérieure à 3 N/mm².

19. Produit alvéolaire (1) selon l'une quelconque des revendications 14 à 18, **caractérisé en ce que** la conductivité thermique est inférieure à 0,1 W/mK.

20. Utilisation du produit alvéolaire (1) selon l'une quelconque des revendications 14 à 19 sous forme de matériau de construction, en particulier pour des constructions dans le bâtiment.

21. Utilisation du produit alvéolaire (1) selon l'une quelconque des revendications 14 à 19 pour la réalisation d'éléments isolants pour les constructions dans le bâtiment, en particulier pour le découplage thermo-technique entre des éléments porteurs et le support.

22. Utilisation du produit alvéolaire (1) selon l'une quelconque des revendications 14 à 19 pour la réalisation d'objets destinés à générer la poussée verticale dans des liquides.
